(19) Europäisches Patentamt
European Patent Office
Office européen des brevets

(11) **EP 4 589 345 A1**

(12) **EUROPEAN PATENT APPLICATION**
published in accordance with Art. 153(4) EPC

(43) Date of publication:
**23.07.2025 Bulletin 2025/30**

(51) International Patent Classification (IPC):
**G02B 5/18** (2006.01)

(21) Application number: **22959706.7**

(22) Date of filing: **17.10.2022**

(86) International application number:
**PCT/CN2022/125609**

(87) International publication number:
**WO 2024/065893 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 CN 202211198640**

(71) Applicant: **Shanghai Institute of Optics and Fine Mechanics Chinese Academy of Sciences Shanghai 201800 (CN)**

(72) Inventors:
• **JIN, Yun Xia**
  **Shanghai 201800 (CN)**

• **HAN, Yu Xing**
  **Shanghai 201800 (CN)**
• **KONG, Fan Yu**
  **Shanghai 201800 (CN)**
• **CAO, Hong Chao**
  **Shanghai 201800 (CN)**
• **ZHANG, Yi Bin**
  **Shanghai 201800 (CN)**
• **SHAO, Jianda**
  **Shanghai 201800 (CN)**

(74) Representative: **karo IP Patentanwälte PartG mbB Steinstraße 16-18 40212 Düsseldorf (DE)**

(54) **PULSE COMPRESSION ELECTRUM OPTICAL GRATING AND MANUFACTURING METHOD THEREFOR**

(57) A pulse-compressed amber gold grating and its preparation method, wherein the metal layer of the amber gold grating is composed of a binary or multi-element mixture of gold-based materials containing silver and platinum group elements in appropriate proportions, or a gold-on-silver thin film structure. The preparation process includes the optimization of the characteristic contour parameters of the amber gold grating and the material ratio of the amber gold film. The amber gold grating of the present invention, without degrading the traditional optical performance of gold gratings, broadens the high-diffraction-efficiency wavelength range of the grating, addresses or improves the oxidation susceptibility of pure silver gratings, and further enhances the laser damage threshold of gold gratings. The process parameters can support the fabrication of gratings with an aperture size up to the meter level. The gratings and related process parameters of the present invention can support the development of various devices, ranging from spectrometers and commercial ultrafast lasers to large-scale high-peak-power lasers. This has significant implications for the advancement of pulse compression gratings.

FIG. 4

EP 4 589 345 A1

# EP 4 589 345 A1

**Description**

## TECHNICAL FIELD

The present invention relates to a reflective grating, and more particularly to an amber gold grating for pulse compression and its preparation method.

## BACKGROUND ART

The field of ultra-intense and ultra-short laser is currently at a critical stage of achieving significant breakthroughs and expanding applications. Internationally, there is a strong push for the development of ultra-intense and ultra-short laser sources, as well as cutting-edge scientific and technological innovation platforms based on them. Research institutes and scientific organizations worldwide are effectively utilizing Chirped Pulse Amplification (CPA) and Optical Parametric Chirped Pulse Amplification (OPCPA) to push the peak power of lasers to the tens of petawatt (PW) level. Within the next decade, 100PW ultra-intense and ultra-short laser facilities are expected to be progressively commissioned globally. The race to achieve even higher peak power has become a competitive arena among major countries.

In the two laser amplification technologies, CPA and OPCPA, the grating compressor is the core module, and the key component of the grating compressor is the grating. Metal gratings, due to their advantages of wide bandwidth, high efficiency, excellent surface figure, and broad angular spectrum, are highly favored in both small-scale and large-scale laser systems.

Currently, to ensure the long-term service environment and stable performance of pulse compression gratings, the metal layer is almost exclusively made of pure gold. For high-energy laser systems, the purity of gold is required to reach 99.99% or even 99.999%. According to the current and future needs for high-peak-power laser construction, gold gratings are expected to achieve an average diffraction efficiency of 90-94% across different bandwidths in the 700-1200 nm range. The laser-induced damage threshold (LIDT) is already close to its limit. Therefore, there is an urgent need to develop pulse compression metal gratings with higher LIDT and superior optical and thermomechanical properties while retaining the advantages of traditional gold gratings.

No one at home and abroad has proposed the design, preparation, testing, and application of pulse-compressed amber gold gratings. Pulse-compressed amber gold gratings refer to binary mixtures containing silver in a gold base, or gratings with a gold top and a silver bottom. The metal film layer with high electrical conductivity helps to improve the diffraction efficiency of the metal grating, enhance the laser damage threshold, and expand the high-efficiency bandwidth. The multi-component hybrid structure helps to improve the oxidation resistance of silver and enhance the deformation resistance of pure gold or silver. The research on pulse-compressed amber gold gratings is of great significance.

## SUMMARY OF THE INVENTION

The technical problem to be solved by the present invention is to provide a pulse compression amber gold grating and its preparation method. The grating, while ensuring the optical performance of traditional pure gold gratings, broadens the high-diffraction-efficiency wavelength range of the grating; addresses or improves the oxidation susceptibility of pure silver gratings; and further enhances the laser damage threshold of gold gratings. It has significant scientific research, economic, and application value.

The technical solution of the present invention is as follows:

On one hand, the present invention provides a pulse compression amber gold grating, characterized in that the metal layer of the grating is a gold-on-silver metal film, or a binary or multi-component mixture film containing other metals in addition to gold, or a gold top with a base of a monometallic or multi-metallic mixture film containing metals other than gold.

Further, the gold-on-silver metal film refers to the deposition of a pure silver film on the grating mask, followed by the deposition of a pure gold film on top of the silver film.

Further, the binary mixture film includes gold-based binary alloy films containing silver, copper, or platinum group metals (such as platinum, palladium, iridium, ruthenium, rhodium, and osmium).

Further, the gold-based silver-containing binary alloy film refers to the direct deposition of an alloy film with different atomic percentages of gold and silver onto the grating mask.

Further, the multi-component mixture film includes gold-based ternary mixture films containing iridium and platinum, or multi-component mixture films containing silver, iridium, and platinum.

On the other hand, the present invention also provides a method for preparing a pulse compression amber gold grating, which includes the following steps:

    1) Design of the Amber Gold Grating:

The characteristic contour function of the grating is defined as

$$h(x) = \max\left\{0, H\left[1 - \left|\sin\left(\pi\frac{x}{d\cdot f}\right)\right|\right]^{\sigma}\right\} ,$$

The characteristic contour function of the grating is defined as

$$h(x) = \max\left\{0, H\left[1 - \left|2\frac{x}{d\cdot f}\right|\right]^{\sigma}\right\} ,$$

Herein, h represents the depth of the grating contour in the vertical direction, x represents the length of the grating in the horizontal direction, H represents the maximum groove depth, d represents the grating period, f represents the duty cycle of the grating, and σ represents the shape factor of the grating contour;

The characteristic functions one and two are both suitable for simulating real grating profiles. In the design, when the same parameters mentioned above are selected, characteristic function one is suitable for simulating gratings with an S-shaped transition from the top to the bottom of the grating ridge or with a flat top. Characteristic function two is suitable for simulating gratings with a sudden truncation at the bottom of the grating ridge, outwardly convex sidewalls, or a sharp top.

The initial wavelength is selected based on the requirements. The characteristic contour function of the grating is chosen, and the optimal groove depth, period, duty cycle, and shape factor for achieving high diffraction efficiency within a specific spectral bandwidth are determined through global optimization or local optimization algorithms;

2) Preparation of the Amber Gold Grating Mask:

The grating designed in Step 1 is prepared, including substrate cleaning, coating, baking, exposure, and development;

3) Deposition of the Amber Gold Layer:

Using preparation techniques such as magnetron sputtering or electron-beam evaporation, an amber gold film with a gold top and silver bottom is deposited, or binary or multi-component alloy films containing silver or other metals in a gold base are prepared using dual-source or multi-component co-deposition techniques.

By adjusting parameters such as the base vacuum pressure, power supply power, gas flow rate, working gas pressure, and deposition rate, amber gold films with different compositions are prepared.

The thickness, roughness, and elemental content of the amber gold film are tested;

Using magnetron sputtering technology, the deposition parameters for Au and Ag are controlled as follows: a base vacuum pressure of $1\times10^{-3}$ to $8\times10^{-4}$ Pa, argon gas flow rate of 40-50 sccm, power supply power of 100-600 W, and working gas pressure of 0.3-0.5 Pa. For Step 3, a gold-on-silver metal film and a gold-silver binary alloy film with a total thickness of 50-300 nm are deposited on the grating mask;

4) Optimization of Amber Gold Grating: The optical performance of the prepared amber gold gratings with different top and bottom layer thicknesses (gold-on-silver) or different elemental compositions is characterized. The optimal amber gold grating is selected based on the best overall performance in terms of reflectivity, spectral bandwidth, and angular bandwidth;

5) Damage Performance Testing of Amber Gold Grating: According to ISO 21254, single-pulse or multi-pulse damage testing is conducted on the amber gold grating prepared in Step 4;

The technical effects of the present invention are as follows:

1) The grating of the present invention can broaden the high-diffraction-efficiency wavelength range without degrading the optical performance of traditional gold gratings and further enhance the laser damage threshold of gold gratings.

2) The grating of the present invention has strong compatibility and can directly replace the gold gratings currently in service under existing application conditions. It improves the safety threshold of gold gratings used in high-power lasers and ensures higher power output from the lasers.

3) The process parameters of the grating of the present invention are stable and can support the fabrication of gratings with an aperture size up to the meter level.

4) The grating of the present invention can address or improve the oxidation susceptibility of pure silver gratings. It has strong environmental stability and a long service life.

5) The grating and related process parameters of the present invention can support the development of various devices, ranging from spectrometers and commercial ultrafast lasers to large-scale high-peak-power lasers. It has significant economic and practical value in fields such as spectrometers and high-power lasers.

## BRIEF DESCRIPTION OF THE DRAWINGS

Figure 1 is a structural diagram of Example 1 of the pulse compression amber gold grating of the present invention. Figure 2 is a reflectivity chart of the grating metal layer for Comparative Example 1 and Example 1 of the pulse compression amber gold grating of the present invention. The incident light is TM-polarized with an incident angle of 62°.

Figure 3 is a chart of the -1st order diffraction efficiency for Comparative Example 1 and Example 1. The incident light is TM-polarized with an incident angle of 62°, a grating line density of 1400 g/mm, a duty cycle of 0.7, a groove depth of 220 nm, and a shape factor of 3. Figure 4 is a damage test probability chart for Comparative Example 1 and Example 1. The test laser has a central wavelength of 925 nm, a bandwidth of 825-1025 nm, and a pulse width of 3 ns.

Figure 5 is a structural diagram of Examples 2, 3, and 4 of the pulse compression amber gold grating of the present invention.

Figure 6 is a reflectivity chart of the grating metal layer for Comparative Example 2 and Example 2 of the pulse compression amber gold grating of the present invention. The incident light is TM-polarized with an incident angle of 62°.

Figure 7 is a chart of the -1st order diffraction efficiency for Comparative Example 2 and Example 2. The incident light is TM-polarized with an incident angle of 50°, a grating line density of 1443 g/mm, a duty cycle of 0.7, a groove depth of 200 nm, and a shape factor of 1.8.

Figure 8 is a damage test probability chart for Comparative Example 2 and Example 2. The test laser has a central wavelength of 925 nm, a bandwidth of 825-1025 nm, and a pulse width of 15 fs.

Figure 9 is a chart of the -1st order diffraction efficiency for Comparative Example 2 and Example 3. The incident light is TM-polarized with an incident angle of 54°, a grating line density of 1480 g/mm, a duty cycle of 0.6, a groove depth of 200 nm, and a shape factor of 2.5.

Figure 10 is a damage test probability chart for Comparative Example 2 and Example 4. The test laser has a central wavelength of 925 nm, a bandwidth of 825-1025 nm, and a pulse width of 15 fs.

Figure 11 is a chart of the -1st order diffraction efficiency for Comparative Example 1 and Example 5. The incident light is TM-polarized with a wavelength of 920 nm, a grating line density of 1400 g/mm, a duty cycle of 0.7, a groove depth of 220 nm, and a shape factor of 3.

In the figures:

1 - Gold-on-silver amber gold grating
2 - Gold-based amber gold grating containing silver, copper, or other metals in binary or multi-component mixtures
3 - Gold layer
4 - Silver or platinum group metal (binary or multi-component) mixture layer
5 - Mask layer
6 - Amber gold layer

## Detailed Implementation Methods

Below, the present invention is further explained in conjunction with specific examples and the accompanying drawings. However, this should not be construed as limiting the scope of protection of the present invention.

Example 1:

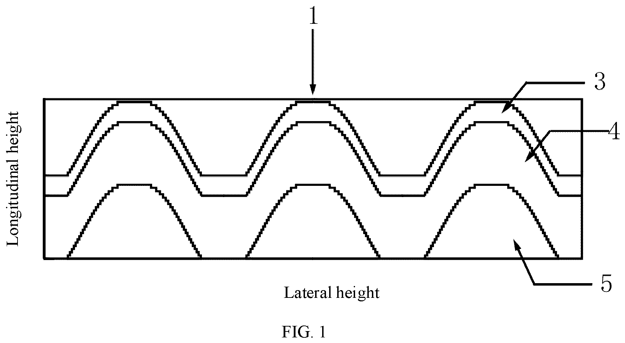

A gold-on-silver amber gold grating was prepared, as shown in Figure 1.

Using magnetron sputtering technology, five sets of gold-on-silver metal films with a total thickness of 200 nm were deposited, with the following material combinations: 6 nm Au + 194 nm Ag, 8 nm Au + 192 nm Ag, 10 nm Au + 190 nm Ag, 12 nm Au + 188 nm Ag, and 15 nm Au + 185 nm Ag. The sputtering parameters for Au and Ag were as follows: a base vacuum pressure of $8\times10^{-4}$ Pa, an argon gas flow rate of 40 sccm, a power supply power of 300 W, and a working gas pressure of 0.5 Pa. The sputtering rates for Au and Ag were 0.42 s/nm and 0.40 s/nm, respectively.

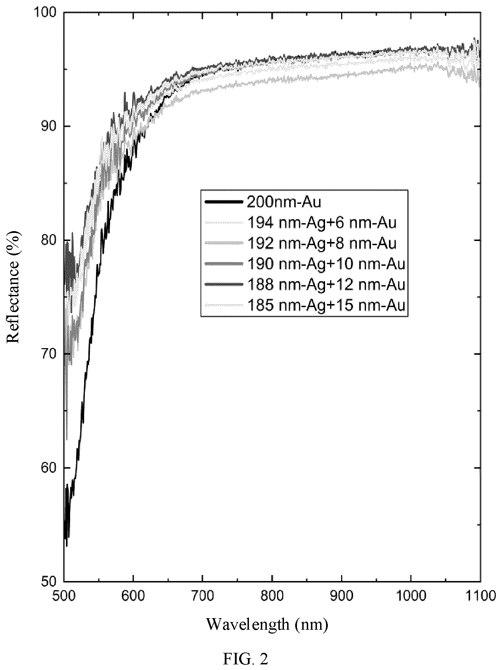

The diffraction efficiency measurement system was used to test the spectra of the five sets of samples with TM-polarized light. The reflectivity of the samples in the 500-1150 nm wavelength range was tested at a fixed angle of 62°. As shown in Figure 2, all the gold-on-silver samples outperformed the pure gold samples in terms of bandwidth. The sample with 12 nm Au + 188 nm Ag demonstrated superior performance in both spectral bandwidth and absolute efficiency compared to the pure gold sample.

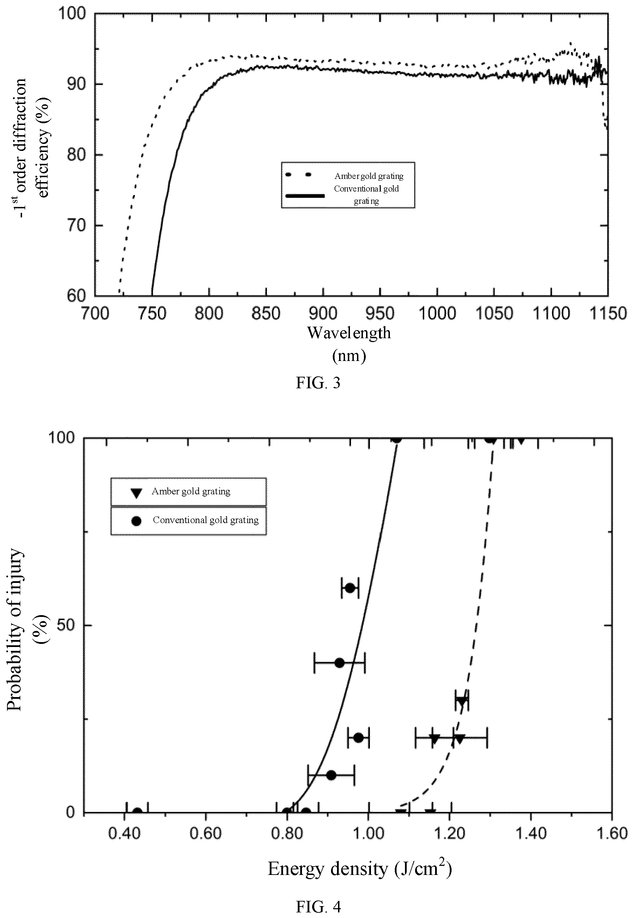

The grating parameters designed in this example are as follows: a line density of 1400 lines/mm, a duty cycle of 0.7, a groove depth of 220 nm, and a shape factor of 3. Gratings with the above specifications were fabricated. The substrate was cleaned with ethanol or acetone. A photoresist layer approximately 220 nm thick was spin-coated onto the substrate at a rate of 2800 r/min for 30 seconds using a spin coater, and then the substrate was baked at 100°C for 2 minutes. Subsequently, the substrate coated with the photoresist layer was exposed to 325 nm light at an exposure power of 50 μW for 200 seconds using a two-beam interference exposure method. The exposed sample was then immersed in a sodium hydroxide solution with a mass fraction concentration of 4‰ for 50 seconds. Finally, a gold-on-silver amber gold grating with a thickness of 12 nm Au + 188 nm Ag was deposited using magnetron sputtering technology. The diffraction efficiency of the sample in the 700-1150 nm wavelength range was tested at a fixed angle of 62°. As shown in Figure 3, compared to traditional gold gratings, the measured -1st order diffraction efficiency of the amber gold grating is higher than 90% in the range of 770 nm to greater than 1150 nm. The overall diffraction efficiency has increased, and the bandwidth has been extended towards shorter wavelengths by nearly 40 nm.

According to the ISO 21254 standard, a 1-on-1 laser damage threshold (LIDT) test was conducted on the samples. As shown in Figure 4, under the test conditions of a central wavelength of 925 nm, a bandwidth of 825-1025 nm, and a pulse width of 3 ns, the laser-induced damage threshold of the amber gold grating was increased by nearly 40% compared to that of the pure gold grating.

Example 2:

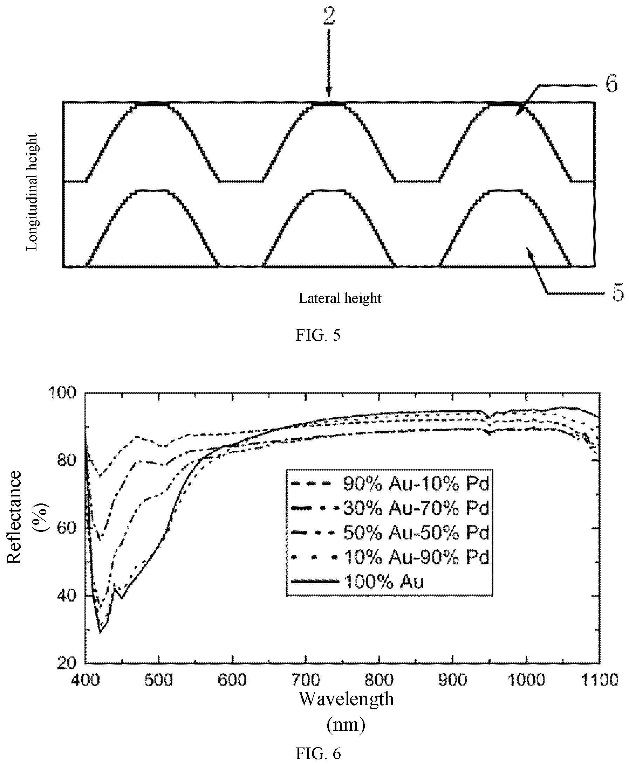

A gold-based palladium-containing binary mixed amber-gold grating was prepared, and the structure is shown in Figure 5.

Using magnetron dual-source co-sputtering technology, four sets of gold-palladium binary alloy gratings with a total thickness of 200 nm were prepared. The composition ratios of gold (Au) and palladium (Pd) were 90%-Au + 10%-Pd, 50%-Au + 50%-Pd, 30%-Au + 70%-Pd, and 10%-Au + 90%-Pd, respectively. The sputtering parameters included a background vacuum pressure of $1\times10^{-3}$ Pa, an argon gas flow rate of 50 sccm, a power supply power of 500 W, and a working gas pressure of 0.3 Pa. The sputtering rates for Au and Pd were 0.38 s/nm and 0.36 s/nm, respectively.

The diffraction efficiency measurement system was used to test the spectra of the four sets of samples with TM-polarized light. The reflectivity of the samples in the 400-1100 nm wavelength range was tested at a fixed angle of 62°. As shown in Figure 6, all the gold-palladium samples outperformed the pure gold samples in terms of bandwidth. The sample with 10%-Au + 90%-Pd demonstrated superior performance in both spectral bandwidth and absolute efficiency compared to the pure gold sample.

The grating parameters designed in this example are as follows: a line density of 1443 lines/mm, a duty cycle of 0.7, a groove depth of 200 nm, and a shape factor of 1.8. Gratings with the above specifications were fabricated. The substrate was cleaned with ethanol or acetone. A photoresist layer approximately 200 nm thick was spin-coated onto the substrate at a rate of 2500 r/min for 30 seconds using a spin coater, and then the substrate was baked at 100°C for 2 minutes. Subsequently, the substrate coated with the photoresist layer was exposed to 325 nm light at an exposure power of 50 μW for 200 seconds using a two-beam interference exposure method. The exposed sample was then immersed in a sodium hydroxide solution with a mass fraction concentration of 4‰ for 65 seconds. Finally, a 10%-Au + 90%-Pd amber gold grating with a thickness of 200 nm was deposited using magnetron dual-source co-sputtering technology.

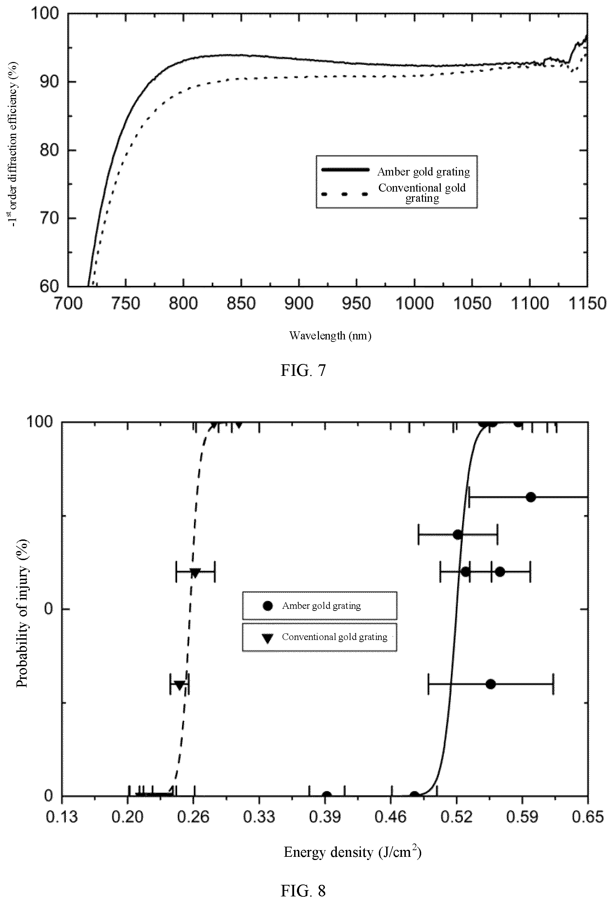

The -1st order diffraction efficiency of the samples was tested at a fixed angle of 62° within the 700-1150 nm wavelength range. As shown in Figure 7, the measured -1st order diffraction efficiency of the amber gold grating exceeded 90% in the range of 773-1150 nm. Compared to traditional gold gratings, the bandwidth was extended towards shorter wavelengths by approximately 65 nm.

As shown in Figure 8, under the test conditions of a central wavelength of 925 nm, a bandwidth of 825-1025 nm, and a pulse width of 15 fs, the laser-induced damage threshold (LIDT) of the amber gold grating was increased by nearly 113% compared to that of the pure gold grating.

Example 3:

A multi-component mixed amber gold grating containing silver and platinum in a gold base was prepared, with the structure shown in Figure 5.

The grating parameters designed in this example are as follows: a line density of 1480 lines/mm, a duty cycle of 0.7, a groove depth of 200 nm, and a shape factor of 2.5. Gratings with the above specifications were fabricated. The substrate was cleaned with ethanol or acetone. A photoresist layer approximately 220 nm thick was spin-coated onto the substrate at a rate of 2800 r/min for 30 seconds using a spin coater, and then the substrate was baked at 100°C for 2 minutes. Subsequently, the substrate coated with the photoresist layer was exposed to 325 nm light at an exposure power of 50 μW for 200 seconds using a two-beam interference exposure method. The exposed sample was then immersed in a sodium hydroxide solution with a mass fraction concentration of 4‰ for 90 seconds. Finally, an amber gold grating with a thickness of 200 nm and a composition of 80%-Au + 10%-Ag + 10%-Pt was deposited using magnetron dual-source co-sputtering technology.

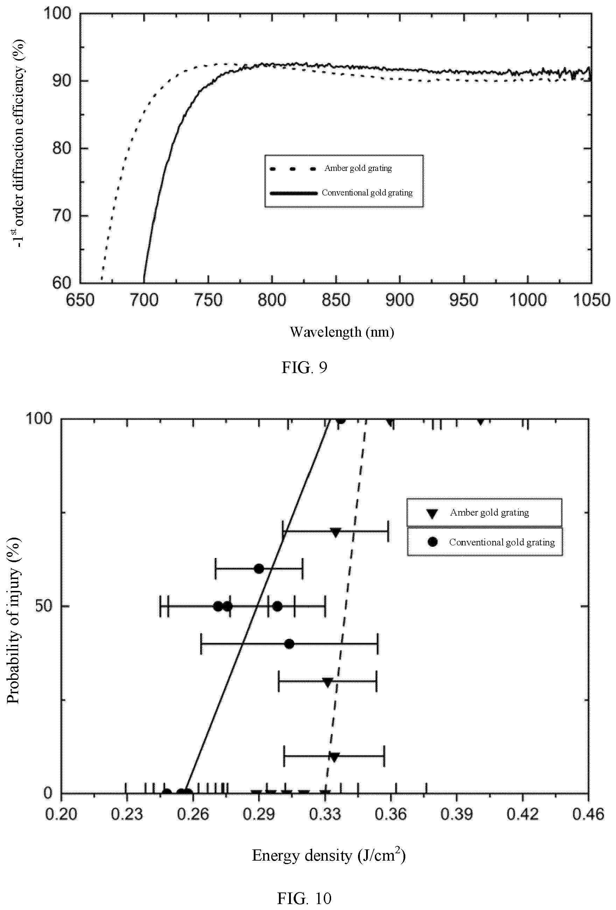

The -1st order diffraction efficiency of the samples was tested at a fixed angle of 54° within the 650-1050 nm wavelength range. As shown in Figure 9, the measured -1st order diffraction efficiency of the amber gold grating exceeded 90% in the range of 720-1050 nm. Compared to traditional gold gratings, the overall diffraction efficiency of the amber gold grating decreased by no more than 1%, while the bandwidth was extended towards shorter wavelengths by nearly 40 nm.

Example 4:

A multi-component mixed amber gold grating containing iridium and platinum in a gold base was prepared, with the structure shown in Figure 5.

The grating parameters designed in this example are as follows: a line density of 1480 lines/mm, a duty cycle of 0.7, a groove depth of 200 nm, and a shape factor of 2.5. Gratings with the above specifications were fabricated. The substrate was cleaned with ethanol or acetone. A photoresist layer approximately 220 nm thick was spin-coated onto the substrate at a rate of 2800 r/min for 30 seconds using a spin coater, and then the substrate was baked at 100°C for 2 minutes. Subsequently, the substrate coated with the photoresist layer was exposed to 325 nm light at an exposure power of 50 μW for 200 seconds using a two-beam interference exposure method. The exposed sample was then immersed in a sodium hydroxide solution with a mass fraction concentration of 4‰ for 90 seconds. Finally, an amber gold grating with a thickness of 200 nm and a composition of 10%-Au + 10%-Ir + 80%-Pt was deposited using magnetron dual-source co-sputtering technology.

As shown in Figure 10, under the test conditions of a central wavelength of 925 nm, a bandwidth of 825-1025 nm, and a pulse width of 15 fs, the laser-induced damage threshold (LIDT) of the amber gold grating was increased by nearly 25% compared to that of the pure gold grating.

Example 5:

A gold-on-top, silver-platinum-on-bottom amber gold grating was prepared, with the structure shown in Figure 1.

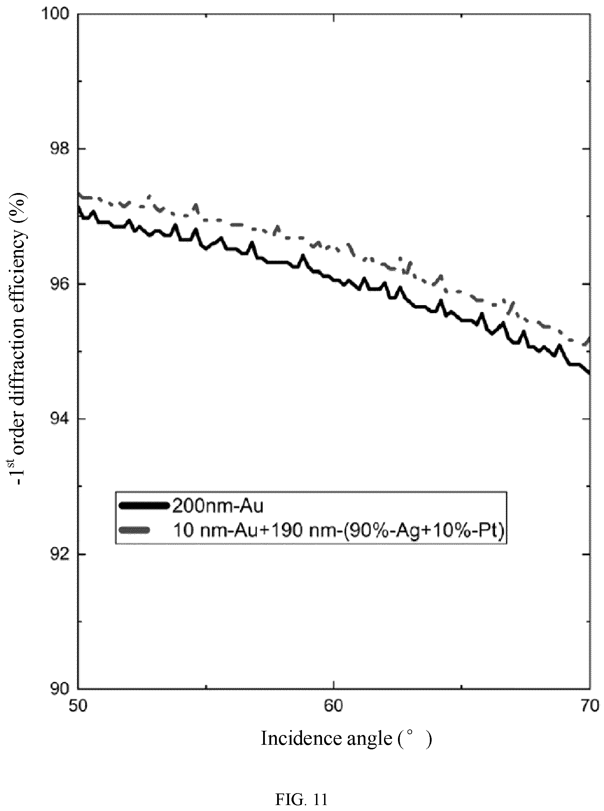

The grating parameters designed in this example are as follows: a line density of 1400 lines/mm. The fabrication process and parameters are consistent with those in Example 1. Finally, an amber gold grating with a thickness of 10 nm Au + 190 nm (90%-Ag + 10%-Pt) was deposited using magnetron sputtering technology. The diffraction efficiency of the samples was tested at a fixed wavelength of 920 nm over an angular range of 50-70°. As shown in Figure 11, the measured -1st order diffraction efficiency of the amber gold grating is higher than that of the traditional gold grating within the tested angular range.

Comparative Example 1:

A pure gold film with a total thickness of 200 nm was prepared using magnetron sputtering technology. The sputtering parameters for Au included a background vacuum pressure of $8 \times 10^{-4}$ Pa, an argon gas flow rate of 40 sccm, a power supply power of 300 W, and a working gas pressure of 0.5 Pa. The sputtering rate was 0.42 s/nm.

The diffraction efficiency measurement system was used to test the reflectivity of the sample in the 500-1150 nm wavelength range at a fixed angle of 62° with TM-polarized light. The results are shown in Figure 2.

The grating line density in this comparative example is 1400 lines/mm, and the fabrication process and parameters are consistent with those in Example 1. Finally, a pure gold grating with a thickness of 200 nm was deposited using magnetron sputtering technology. The diffraction efficiency of the sample was tested at a fixed angle of 62° within the 700-1150 nm wavelength range. As shown in Figure 3, the -1st order diffraction efficiency of the gold grating exceeded 90% in the wavelength range of 805-1150 nm.

According to the ISO 21254 standard, a 1-on-1 laser-induced damage threshold (LIDT) test was conducted on the sample. As shown in Figure 4, under the test conditions of a central wavelength of 925 nm, a bandwidth of 825-1025 nm, and a pulse width of 3 ns, the laser-induced damage threshold of the gold grating was measured to be 0.8 J/cm$^2$.

Comparative Example 2:

A thin film with a total thickness of 200 nm and an elemental composition of 100%-Au was prepared using magnetron sputtering technology. The sputtering parameters for Au included a background vacuum pressure of $1\times10^{-3}$ Pa, an argon gas flow rate of 50 sccm, a power supply power of 500 W, and a working gas pressure of 0.3 Pa. The sputtering rate was 0.38 s/nm.

The diffraction efficiency measurement system was used to test the spectral and angular characteristics of the sample with TM-polarized light. The reflectivity of the sample in the 400-1100 nm wavelength range was tested at a fixed angle of 62°. The results are shown in Figure 6.

The grating line densities in this comparative example are 1480 lines/mm and 1443 lines/mm. The fabrication process and parameters are consistent with those in Examples 2 and 4. Finally, a pure gold grating with a thickness of 200 nm was deposited using magnetron sputtering technology.

The -1st order diffraction efficiency of the 1443 lines/mm gold grating is shown in Figure 7, with the -1st order diffraction efficiency exceeding 90% in the wavelength range of 883-1150 nm. The -1st order diffraction efficiency of the 1480 lines/mm gold grating is shown in Figure 9, with the -1st order diffraction efficiency exceeding 90% in the wavelength range of 760-1050 nm.

As shown in Figures 8 and 10, under the test conditions of a central wavelength of 925 nm, a bandwidth of 825-1025 nm, and a pulse width of 15 fs, the laser-induced damage threshold of the gold grating was measured to be 0.26 $J/cm^2$.

The above examples are intended to further illustrate the invention to those skilled in the art, but are not intended to limit the invention in any form. Ordinary technical personnel in this field may modify or replace the technical solutions of the invention without departing from the concept of the invention, and all such modifications and replacements are within the scope of protection of the invention.

**Claims**

1. A pulse-compression amber gold grating, wherein

   the grating metal layer is a gold-capped monometallic or multimetallic composite metal film, or is a gold-based binary composite film or multi-component composite film containing other metals except gold;
   the grating and a depth of a longitudinal profile thereof satisfies the following formulae:

   $$h_1(x) = \max\left\{0,\ H\left[1-\left|\sin\left(\pi\frac{x}{d\cdot f}\right)\right|\right]^{\sigma}\right\},$$

   or,

   $$h_2(x) = \max\left\{0,\ H\left[1-\left|2\frac{x}{d\cdot f}\right|\right]^{\sigma}\right\}$$

   in the formula, x is a length of a transverse grating profile, H is a maximum groove depth, *d* is a grating period, *f* is a grating aspect ratio, and $\sigma$ is a shape factor of the grating profile.

2. The pulse-compression amber gold grating according to claim 1, wherein the gold-capped monometallic or multimetallic composite metal film substrate comprises a gold-capped silver metal film substrate, and a gold-capped plus monometallic or multimetallic composite metal film substrate of other metals except gold.

3. The pulse-compression amber gold grating according to claim 2, wherein the gold-capped silver metal film substrate is formed by plating a pure silver film on the grating mask, and plating a pure gold film on the pure silver film.

4. The pulse-compression amber gold grating according to claim 2, wherein the gold-capped plus monometallic or multimetallic composite metal film substrate of other metals except gold is formed by plating a monometallic or multimetallic composite film of silver and platinum group metals on the grating mask, and plating the pure gold film on the monometallic or multimetallic composite film of the silver and platinum group metals.

5. The pulse-compression amber gold grating according to claim 1, wherein the binary composite film is a gold-based silver-containing binary alloy film, a gold-based aluminum-containing binary alloy film, a gold-based copper-containing binary alloy film, and a gold-based platinum group metal-containing (platinum, palladium, iridium, ruthenium, rhodium, osmium) binary alloy film.

6. The pulse-compression amber gold grating according to claim 5, wherein the gold-based silver-containing binary alloy film is formed by directly plating alloy films with different atomic percentages of gold and silver on the grating mask.

7. The pulse-compression amber gold grating according to claim 1, wherein the multi-component composite film is a gold-based iridium-platinum-containing ternary composite film or a gold-based silver-iridium-platinum containing multi-component composite film.

8. A method for preparing the pulse-compression amber gold grating according to any one of claims 1-7, wherein the method comprises the steps of:

    1) designing amber gold grating:

        a first longitudinal grating profile depth function $h_1(x)$ used for simulating an S-shaped transition from a top to a bottom of a grating ridge, or a flat top, the formula being as follows:

$$h_1(x) = \max\left\{0,\ H\left[1 - \left|\sin\left(\pi\frac{x}{d\cdot f}\right)\right|\right]^{\sigma}\right\},$$

        a second longitudinal grating profile depth function $h_2(x)$ used for simulating the suddenly cut-off bottom of the grating ridge, a convex side wall, or a sharp top end, the formula being as follows:

$$h_2(x) = \max\left\{0,\ H\left[1 - \left|2\frac{x}{d\cdot f}\right|\right]^{\sigma}\right\}$$

        wherein in the formula, $x$ is a length of a transverse grating profile, $H$ is a maximum groove depth, $d$ is a grating period, $f$ is a grating aspect ratio, and $\sigma$ is a shape factor of the grating profile;
        selecting the longitudinal grating profile depth function and initial wavelength, and determining an optimal groove depth, a period, an aspect ratio and a shape factor for high diffraction efficiency within a specific spectral bandwidth by global optimization or local optimization algorithm;

    2) preparing an amber gold grating maskgrating :

        ① preparing an amber gold film grating designed in step 1), plating a gold top silver bottom metal film and a gold and silver binary alloy film with a total thickness of the grating mask being from 50 to 300 nm by cleaning, gluing, baking, exposing and developing the substrate;

    3) the amber gold layer plating:
    using magnetron sputtering, electron beam evaporation, wherein a plating background vacuum degree of refulating Au and Ag is from $1\times10^{-3}$ to $8\times10^{-4}$ Pa, a flow rate of argon gas is from 40 to 50 sccm, a power supply power is from 100 to 600 W, and a working pressure is from 0.3 to 0.5 Pa, so as to prepare amber gold films with different ratios, and testing thickness; roughness and element content of the amber gold film.
    4) Performing amber gold grating damage performance test: performing a single-pulse or multi-pulse damage test on the amber gold grating prepared in step 3) under use conditions;
    5) Making the amber gold grating preferable: subjecting the prepared amber gold gratings with different top and bottom layer thickness or different element content to optical property characterization, and screening out the amber gold grating with the best comprehensive reflectivity, spectral width and angular spectral width.

FIG. 1

FIG. 2

FIG. 3

FIG. 4

FIG. 5

FIG. 6

FIG. 7

FIG. 8

FIG. 9

FIG. 10

FIG. 11

## INTERNATIONAL SEARCH REPORT

| | International application No. |
|---|---|
| | **PCT/CN2022/125609** |

### A.　CLASSIFICATION OF SUBJECT MATTER

G02B5/18(2006.01)i

According to International Patent Classification (IPC) or to both national classification and IPC

### B.　FIELDS SEARCHED

Minimum documentation searched (classification system followed by classification symbols)

　　IPC：G02B

Documentation searched other than minimum documentation to the extent that such documents are included in the fields searched

Electronic data base consulted during the international search (name of data base and, where practicable, search terms used)

　　CNTXT, ENTXT, CNKI: 中国科学院, 上海光学精密机械, 脉冲, 压缩, 琥珀金, 光栅, 金, 银, 铝, 铜, 铂, 钯, 铱, 钌, 铑, 锇, 合金, 溅射, 轮廓, 深度, 函数, pulse compress+, amber gold, grating?, gold, silver, platinum, alloy, metal

### C.　DOCUMENTS CONSIDERED TO BE RELEVANT

| Category* | Citation of document, with indication, where appropriate, of the relevant passages | Relevant to claim No. |
|---|---|---|
| X | CN 114041072 A (HORIBA FRANCE SAS) 11 February 2022 (2022-02-11)<br>description, paragraphs [0045]-[0075], and figures 2-3 | 1-4, 8 |
| X | CN 114660805 A (DALIAN UNIVERSITY OF TECHNOLOGY) 24 June 2022 (2022-06-24)<br>description, paragraphs [0041]-[0054], and figures 1-3 | 1, 5-8 |
| X | CN 114879293 A (SHANGHAI INSTITUTE OF OPTICS AND FINE MECHANICS, CHINESE ACADEMY OF SCIENCES) 09 August 2022 (2022-08-09)<br>description, paragraphs [0006]-[0023] and [0042], and figure 10 | 1, 5-8 |
| A | CN 104956554 A (SHIMADZU CORP.) 30 September 2015 (2015-09-30)<br>entire document | 1-8 |
| A | CN 107315211 A (INSTITUTE OF MICROELECTRONICS OF CHINESE ACADEMY OF SCIENCES) 03 November 2017 (2017-11-03)<br>entire document | 1-8 |
| A | US 2012093191 A1 (HORIBA JOBIN YVON S.A.S.) 19 April 2012 (2012-04-19)<br>entire document | 1-8 |

☐ Further documents are listed in the continuation of Box C.　　☑ See patent family annex.

| *　Special categories of cited documents: | "T"　later document published after the international filing date or priority date and not in conflict with the application but cited to understand the principle or theory underlying the invention |
|---|---|
| "A"　document defining the general state of the art which is not considered to be of particular relevance | |
| "D"　document cited by the applicant in the international application | "X"　document of particular relevance; the claimed invention cannot be considered novel or cannot be considered to involve an inventive step when the document is taken alone |
| "E"　earlier application or patent but published on or after the international filing date | |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | "&"　document member of the same patent family |
| "P"　document published prior to the international filing date but later than the priority date claimed | |

| Date of the actual completion of the international search | Date of mailing of the international search report |
|---|---|
| **09 June 2023** | **20 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

International application No.

**PCT/CN2022/125609**

| Patent document cited in search report | | | Publication date (day/month/year) | Patent family member(s) | | | Publication date (day/month/year) |
|---|---|---|---|---|---|---|---|
| CN | 114041072 | A | 11 February 2022 | IL | 287376 | A | 01 December 2021 |
| | | | | EP | 3956700 | A1 | 23 February 2022 |
| | | | | WO | 2020212556 | A1 | 22 October 2020 |
| | | | | FR | 3095281 | A1 | 23 October 2020 |
| | | | | FR | 3095281 | B1 | 27 August 2021 |
| | | | | JP | 2022530366 | A | 29 June 2022 |
| | | | | US | 2022179137 | A1 | 09 June 2022 |
| CN | 114660805 | A | 24 June 2022 | None | | | |
| CN | 114879293 | A | 09 August 2022 | None | | | |
| CN | 104956554 | A | 30 September 2015 | TW | 201431221 | A | 01 August 2014 |
| | | | | TWI | 502833 | B | 01 October 2015 |
| | | | | US | 2015349479 | A1 | 03 December 2015 |
| | | | | US | 9948053 | B2 | 17 April 2018 |
| | | | | WO | 2014118925 | A1 | 07 August 2014 |
| | | | | EP | 2953214 | A1 | 09 December 2015 |
| | | | | EP | 2953214 | B1 | 19 December 2018 |
| | | | | JP | 6036854 | B2 | 30 November 2016 |
| | | | | JPWO | 2014118925 | A1 | 26 January 2017 |
| CN | 107315211 | A | 03 November 2017 | None | | | |
| US | 2012093191 | A1 | 19 April 2012 | EP | 2425283 | A1 | 07 March 2012 |
| | | | | EP | 2425283 | B1 | 26 June 2019 |
| | | | | FR | 2945159 | A1 | 05 November 2010 |
| | | | | FR | 2945159 | B1 | 01 April 2016 |
| | | | | WO | 2010125308 | A1 | 04 November 2010 |
| | | | | US | 8482855 | B2 | 09 July 2013 |

Form PCT/ISA/210 (patent family annex) (July 2022)